# FASCICULE DE BREVET EUROPEEN

(11) **EP 3 233 440 B1**
(45) Date de publication et mention de la délivrance du brevet: **20.02.2019**
(21) Numéro de dépôt: 15818002.6
(22) Date de dépôt: 11.12.2015
(51) Int. Cl.: B29C 70/54, B29C 33/00, B29C 33/76, B29C 43/36

(54) **MOULE POUR LA FABRICATION DE PIÈCE EN MATIÈRE PLASTIQUE COMPORTANT UN SYSTÈME DE POINCONNAGE DE LA PIÈCE**
WERKZEUG ZUR HERSTELLUNG VON KUNSTSTOFF-TEILEN MIT EINER STANZANORDNUNG
MOULD FOR MAKING PLASTICS ARTICLES COMPRISING A PUNCHING ARRANGEMENT

(30) Priorité: 19.12.2014 FR 1462942
(43) Date de publication de la demande: 25.10.2017
(73) Titulaire: Compagnie Plastic Omnium, 69007 Lyon (FR)
(72) Inventeur: BOKSEBELD, Marcel, 38150 Anjou (FR); TORRES, Olivier, 69230 Saint-Genis Laval (FR)
(74) Mandataire: Andrieux, Benoît
(86) Numéro de dépôt international: PCT/FR2015/053428
(87) Numéro de publication internationale: WO 2016/097548

(56) Documents cités:
- EP-A1- 2 607 062
- FR-A1- 2 841 818
- US-A- 1 972 789
- US-A1- 2008 315 460

## Description

La présente invention concerne le domaine technique de la fabrication par moulage de pièces en matière plastique, et notamment de pièces comportant des orifices.

Il peut s'agir en particulier, mais non exclusivement, de pièces structurelles de véhicule automobile, telles que des faces avant techniques, des supports d'ailes et des planchers.

Ce type de pièce à la particularité de comporter des orifices traversants tout en devant conserver une bonne tenue mécanique.

Pour réaliser une pièce en matière plastique, il est connu d'utiliser un procédé de moulage, tel que le moulage par compression et/ou par injection et/ou par extrusion.

Le moulage par compression à chaud sous pression dans un moule, est en général réalisé par déplacement d'un élément mobile du moule (mis en mouvement par une presse) par rapport à un élément fixe du moule, ces éléments étant typiquement en acier.

Généralement, on pose dans un moule de compression un plan de chargement constitué de feuilles de matière plastique, typiquement un matériau composite, par exemple thermodurcissable comme le «SMC» (de l'anglais «sheet moulding compound»).

Puis on actionne la presse pour fermer le moule. On dit que le moule descend (se ferme) jusqu'à une position fermée.

Puis on continue d'actionner la presse pour transmettre une pression de moulage à la matière plastique. On dit que le moule est en phase de compactage. La matière plastique peut alors fluer et prendre la forme de l'empreinte du moule.

Enfin, lors d'une phase dite « de cuisson », la matière plastique polymérise pour former une pièce finie.

Pour réaliser un orifice dans la pièce finale, il peut être envisagé de concevoir le moule avec une empreinte d'orifice, c'est-à-dire une forme locale et moulante pour chaque orifice. Par exemple, le moule pourrait comporter une broche, située en périphérie de l'empreinte et non en regard du plan de chargement, ayant la forme de l'orifice souhaité, sur un élément du moule qui viendrait en contact de l'autre élément lors de la fermeture du moule.

Cependant, lors du fluage de la matière plastique, les fibres de renfort s'orientent préférentiellement en fonction des directions de fluage, donc elles contournent la broche puis se rejoignent en constituant une ligne de recollement. On ne maitrise donc plus l'orientation aléatoire et uniforme souhaitée des fibres pour obtenir un comportement mécanique isotrope. Il s'ensuit une orientation privilégiée des fibres de renfort, ce qui peut conduire à une anisotropie locale de la pièce, qui aura donc un comportement mécanique différent selon les directions des efforts subis, pouvant induire une robustesse inférieure au besoin dans certaines zones de la pièce finie. En effet, les lignes de recollement comportent généralement moins ou pas de fibres de renfort.

C'est pourquoi, pour obtenir une pièce en matière plastique comprenant des orifices traversants, on moule généralement la pièce en matière plastique, puis après sortie du moule, on réalise avec un autre équipement les orifices en reprise, par exemple par usinage, ou en poinçonnant celui-ci aux endroits souhaités de façon à former des orifices traversants.

L'installation de production nécessaire doit donc comporter, en plus d'un équipement de moulage, une cellule d'usinage intégrée au cycle de fabrication de la pièce. Un tel équipement est couteux et augmente le temps de cycle, et conduit à la génération de poussière et de chutes provenant de la matière enlevée. De plus, cette opération de reprise après moulage est peu compatible avec la réalisation de trous précis (en forme et en aspect).

Pour éviter cette étape de reprise, on connaît un moule permettant de réaliser des orifices de moulage au moyen de broches mobiles de compactage. Les broches sont actionnées par des vérins hydrauliques. Ces broches sont descendues dans l'empreinte de moulage après le fluage de la matière plastique et avant polymérisation.

Cependant, un tel système de moulage in situ se détériore trop à l'usage, car les broches viennent taper contre la face du moule en vis-à-vis, et frotter contre les fibres de renfort qui sont abrasives. De ce fait, et la broche et le moule sont endommagés.

Pour ne pas détériorer de telles broches, on connaît une technique qui consiste à laisser, en position fermée du moule, un jeu minimum entre la broche et la face du moule en vis-à-vis. Ce jeu minimum est réglé pour préserver une distance minimum entre les deux parties du moule, prenant en compte les dispersions de production sur l'épaisseur des pièces (0,5 mm par exemple), en particulier quand l'épaisseur pièce est minimale. Ainsi, la matière n'est pas totalement repoussée en épaisseur, et un voile de matière, est laissé au fond de l'orifice. Ce voile résiduel est ensuite enlevé dans une étape de production supplémentaire. Au moulage, il existe une dispersion d'épaisseur de la pièce moulée, liée aux variations du procédé industriel dues à différents paramètres, tels que la quantité de matière mise en oeuvre. Ainsi, compte tenu des variations de la masse volumique de la matière, du poids mis en oeuvre et du fonctionnement de la presse, le voile résiduel, d'épaisseur non répétable d'une pièce à une autre, peut ainsi varier de 0,2 à 0,7 mm. Il est donc nécessaire de prévoir une action mécanique importante pour enlever ce voile. Par exemple, il peut être nécessaire d'utiliser des équipements lourds permettant un perçage, un meulage ou encore un fraisage. De plus, de tels équipements comportent des outils (forêt, meule, fraise) qu'il est nécessaire de remplacer régulièrement du fait de leur usure ou de leur endommagement. Enfin, de tels outils peuvent être accompagnés de problèmes d'alignement par rapport à l'orifice à mouler.

Pour ne pas détériorer les broches mobiles, on connaît également un moule comportant, dans l'empreinte, en face de la broche mobile, une pièce d'usure interchangeable, parfois appelée contre broche fixe, qui peut être retirée du moule et échangée lorsqu'elle est trop abîmée. Cette solution permet de s'affranchir de la tolérance d'épaisseur du moulage (+0,3/-0,2 mm). Mais il subsiste malgré tout une fine toile (0,1 mm environ) contenant de la fibre de renfort, et qu'il faut malgré tout enlever en reprise manuelle au moyen d'un grenaillage, d'un goupillon, ou d'une lime ronde par exemple.

FR-A-2841818 montre un autre état de la technique.

Ainsi, les broches de compactages existantes laissent une toile d'épaisseur variable entre 0,1 à 0,3, voire 0,7 mm. En effet, pour le moulage par compression, lorsque le sens de compactage de la broche mobile est le même que le sens de fermeture du moule, la toile restante est généralement supérieure à 0,3 mm (tolérance d'épaisseur +0,3/-0,2 mm). L'épaisseur de la toile résiduelle est d'autant plus conséquente que le diamètre de la broche augmente, car il est difficile d'évacuer la fibre de renfort entre la broche mobile et le poinçon lors du compactage.

Ainsi, quelle que soit la méthode, il subsiste une toile d'épaisseur variable au fond de l'orifice en sortie du moule. Cette toile doit être enlevée par des procédés manuels, qui ralentissent la production et augmentent les coûts de production. Par ailleurs, les techniques pour enlever ces toiles, occasionnent des déformations de l'orifice.

L'invention a pour but de remédier à ces inconvénients en fournissant un moule muni d'un système de poinçonnage optimisé, ne laissant aucun voile au fond de l'orifice.

Ainsi, l'objet de l'invention concerne un moule pour la fabrication de pièce en matière plastique, comportant un premier élément et un second élément formant en position fermée du moule une empreinte correspondant à la pièce à réaliser, dans lequel le second élément comporte au moins une broche mobile par rapport au second élément, entre une position rentrée et une position sortie dans l'empreinte. Selon l'invention :
- le premier élément comporte une contre broche mobile par rapport au premier élément et coaxiale avec la broche ;
- la broche mobile est apte à traverser l'empreinte et à venir s'engager dans le premier élément en regard de la contre broche ;
- la contre broche mobile étant reliée à un moyen d'asservissement appliquant une contre force inférieure à la force appliquée sur elle-même par la broche, de sorte qu'une matière plastique comprise entre les deux broches peut être comprimée puis poinçonnée lors du mouvement de la broche vers sa position sortie.

Le moule selon l'invention permet de poinçonner tout en comprimant la matière plastique, permettant de créer une toile si fine qu'elle est facilement poinçonnée dans le moule, et peut donc être enlevée par ces procédés automatiques.

Par ailleurs ce procédé respecte parfaitement la qualité du trou en dimension et en aspect.

Un tel moule est particulièrement adapté pour le moulage de pièce de véhicule automobile telle qu'un hayon ou un plancher, et de façon générale pour toutes pièces nécessitant des trous débouchants (sans recollement lié à une broche fixe).

Selon un exemple, le moyen d'asservissement peut appliquer une contre force égale à environ 50% de la force appliquée par la broche sur la contre broche.

Avantageusement, la contre broche peut être en saille dans l'empreinte en position sortie.

De préférence, le rayon de la contre broche est supérieur au rayon de la broche. Par exemple, le rayon de la contre broche peut être supérieur d'au moins 0,05 mm au rayon de la broche.

Avantageusement, la surface d'appui de la broche et/ou la surface d'appui de la contre broche peut être chromée.

Selon un mode de réalisation, la broche est guidée dans un premier fourreau d'usure, et la contre broche peut être guidée dans un second fourreau d'usure.

Selon un exemple, le moyen d'asservissement peut être un vérin hydraulique ou pneumatique.

L'invention concerne également un procédé de fabrication d'une pièce en matière plastique comportant au moins un orifice, au moyen du moule selon l'invention, le procédé comportant au moins les étapes suivantes :
- on positionne la matière plastique dans l'empreinte du moule ;
- on ferme le moule et l'on compacte la matière plastique dans l'empreinte ;
- après fluage et pendant polymérisation de la matière plastique, on poinçonne la matière plastique polymérisée, en descendant la broche à travers l'empreinte puis dans l'élément fixe, la contre broche descendant également tout en exerçant sur la broche un effort axial F2 dans le sens opposé de l'effort F1 exercé par la broche, l'effort F2 étant moindre que l'effort F1 ;
- on ouvre le moule et l'on éjecte la pièce ; et
- on enlève du moule la pastille issue du poinçonnage, par exemple au moyen d'un soufflage.

Selon un exemple, lors de l'étape de poinçonnage par la broche, l'effort F2 est environ deux fois moindre que l'effort F1.

Selon un mode de réalisation, avant l'étape d'ouverture du moule, on répète l'étape de poinçonnage et de remise en positions initiales de la broche et de la contre broche, de façon à bien poinçonner la pièce.

Selon l'invention, avant l'étape d'ouverture du moule, on peut augmenter l'effort F2 pendant un court instant, supérieur à l'effort F1, de façon à parfaire le poinçonnage.

Enfin, selon un exemple, lors de l'étape d'augmentation de l'effort F2, l'effort F2 peut être environ deux fois supérieur à l'effort F1.

L'invention sera mieux comprise à la lecture des figures annexées, qui sont fournies à titre d'exemples et ne présentent aucun caractère limitatif, dans lesquelles :
- La figure 1 illustre un moule selon l'invention en position fermée, lors de l'étape de remplissage et/ou de fluage de la matière plastique.
- La figure 2 illustre un moule selon l'invention en position fermée, lors de l'étape de descente de la broche mobile.
- La figure 3 illustre un moule selon l'invention en position ouverte, lors de l'étape de recul de la broche mobile.
- La figure 4 illustre un moule selon l'invention en position ouverte, lors de l'étape de soufflage de la pastille poinçonnée.

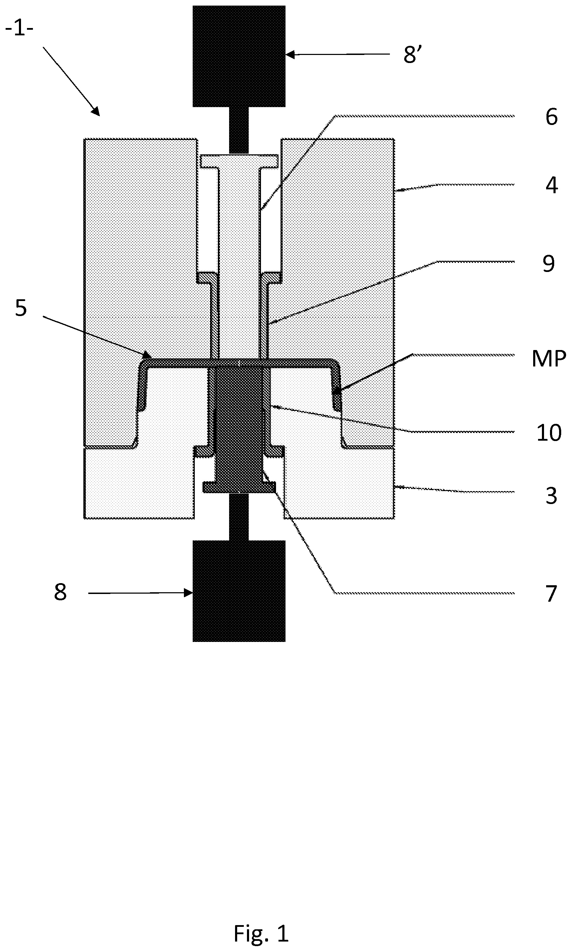

On se réfère maintenant aux figures 1 à 4 qui illustrent un moule (1) selon l'invention, pour la fabrication d'une pièce (2) en matière plastique (MP). Le fonctionnement du moule (1) sera décrit ultérieurement, à partir des figures 1 à 4.

Le moule (1) comporte un premier élément (3), fixe selon l'exemple des figures 1 à 4, et en vis-à-vis, un second élément (4), mobile selon cet exemple. Les deux éléments forment en position fermée du moule (1) une empreinte (5) correspondant à la pièce (2) à réaliser.

La position fermée est définie comme étant la première position, lors de la descente de l'élément mobile (4), dans laquelle l'élément mobile (4) est en contact avec la matière plastique (MP) introduite dans le moule pour le moulage de la pièce (2). Il existe donc en début de fermeture un espace donc un volume libre de matière entre les deux éléments (3, 4) du moule (1), nécessaire pour la phase de compactage.

Le second élément (4) comporte au moins une broche (6) mobile par rapport au second élément (4), entre une position rentrée et une position sortie dans l'empreinte (5). On appelle broche tout organe formant empreinte d'un orifice pour la pièce finie (2), qui peut donc avoir toute forme possible (ronde, carrée, ovale, ...). Il s'agît généralement d'une tige cylindrique, par exemple métallique.

Le premier élément (3) comporte une contre broche (7) mobile par rapport au premier élément (3). Cette contre broche (7) est en vis-à-vis de la broche (6) et coaxiale avec la broche (6).

La broche mobile (6) est reliée à un moyen d'asservissement (8') permettant de déplacer la broche mobile (6) par rapport au second élément (4). Il peut s'agir d'un vérin pneumatique ou hydraulique par exemple.

Grâce à ce moyen d'asservissement (8'), la broche mobile (6) est apte à traverser l'empreinte et à venir s'engager dans le premier élément (3) au niveau de la contre broche (7), c'est-à-dire qu'elle se déplace en même temps que la contre broche (7) dans son logement au sein du premier élément (3).

La contre broche mobile (7) est reliée à un moyen d'asservissement (8) appliquant une contre force inférieure à la force appliquée sur elle-même par la broche (6), de sorte qu'une matière plastique (MP) comprise entre les deux broches (6, 7) peut être comprimée puis poinçonnée lors du mouvement de la broche (6) vers sa position sortie.

La broche (6) est mobile en translation par rapport au second élément (4) : elle est adaptée à coulisser dans le second élément (4), par exemple selon la direction de fermeture du moule (1) comme illustré sur les figures. Selon un mode de réalisation, la broche (6) est guidée dans un alésage du second élément (4). De préférence, la broche (6) est guidée dans un premier fourreau d'usure fixe (9). Ceci permet de faciliter les opérations de maintenance du moule et permet un meilleur ajustement broche/fourreau limitant le risque d'infiltration de matière pouvant constituer des bavures sur la pièce ou générer des coincements sur les parties mobile du moule.

La broche (6) comporte une surface (6a) constituant une surface d'appui sur la matière plastique (MP) dans l'empreinte (5) du moule. La position de la broche (6) lorsque la surface d'appui (6a) est la plus éloignée de l'élément fixe (3), est appelée « position rentrée ». Dans cette position rentrée, la surface (6a) est de préférence affleurante avec la surface du second élément (4) formant l'empreinte (5), de façon à ne pas modifier le volume de l'empreinte du moule (1).

A l'inverse, la position de la broche (6) lorsque la surface d'appui (6a) est la plus éloignée du second élément (4), est appelée « position sortie ». En effet, dans cette position sortie, la surface (6a) a traversé l'empreinte (5), et se retrouve dans le premier élément (3).

La broche (6) a un rayon sensiblement égal, de préférence un peu inférieur, au rayon de l'orifice que l'on souhaite obtenir sur la pièce (2). Mais l'orifice peut avoir une forme différente d'un cylindre. Dans ce cas, la broche aura une forme adaptée à celle de l'orifice.

La contre broche (7) est mobile en translation par rapport au premier élément (3) : elle est adaptée à coulisser dans le premier élément (3), par exemple selon la direction de fermeture du moule (1) comme illustré sur les figures. Selon un mode de réalisation, la contre broche (7) est guidée dans un alésage du premier élément (3). De préférence, la contre broche (7) est guidée dans un second fourreau d'usure fixe (10). Ceci permet de faciliter les opérations de maintenance du moule et permet un meilleur ajustement broche/fourreau limitant le risque d'infiltration de bavures de la matière plastique (résine de SMC par exemple).

Selon l'invention, ce second fourreau d'usure (10) fait également office de matrice de poinçonnage de la matière plastique (MP). C'est pourquoi, de façon avantageuse, on choisit un fourreau composé d'un acier résistant à l'abrasion, de façon à limiter l'usure due aux éléments de renfort (fibres de verre, de carbone...). Toujours de façon avantageuse, le second fourreau (10) comporte un angle intérieur d'entrée (de la broche (6)) proche de 90°. L'intérieur du fourreau est la partie du fourreau dans laquelle coulisse la contre broche (7). Cet angle est « vif » c'est-à-dire sensiblement égale à 90° pour réaliser une découpe, un poinçonnage net.

La contre broche (7) comporte une surface (7a) constituant une surface d'appui sur la matière plastique (MP) dans l'empreinte (5) du moule. La position de la contre broche (7) lorsque la surface d'appui (7a) est la plus éloignée de l'élément fixe (3), est appelée « position sortie ». Dans cette position sortie, la surface (7a) est de préférence en saillie par rapport à la surface du premier élément (3) formant l'empreinte (5), de façon à simplifier l'éjection de la pastille (11) de matière plastique poinçonnée. En effet, une fois le poinçonnage réalisé, et la polymérisation achevée, le moule (1) est ouvert, la pièce est éjectée puis la contre broche (7) reprend sa position d'origine. En étant en saillie, elle éjecte la matière poinçonnée restée sur sa surface (7a). Il est également possible que la surface (7a) soit affleurante avec la surface du premier élément (3) formant l'empreinte (5), de façon à ne peut pas modifier le volume de l'empreinte du moule (1).

A l'inverse, la position de la contre broche (7) lorsque la surface d'appui (7a) est la plus éloignée du second élément (4), est appelée « position rentrée ». Dans cette position rentrée, la surface (7a) est en retrait dans le premier élément (3).

La contre broche (7) possède un rayon légèrement supérieur au rayon de la broche (6), par exemple supérieur d'au moins 0,05 mm (pour éviter que la broche touche le fourreau inférieur), mais inférieur à 0,5 mm (pour assurer un bon poinçonnage). Cette différence de rayon permet d'absorber les différences de coaxialité des broches (6 et 7) portées par les deux éléments du moules (3, 4) et ainsi garantir à la fois que :
- la broche (6) puisse s'insérer sans interférence ni frottement excessif dans le fourreau (10) pour réaliser le poinçonnage ;
- le jeu reste cependant faible pour que l'effet de poinçonnage entre la broche (6) et le fourreau (10) produise une découpe nette.

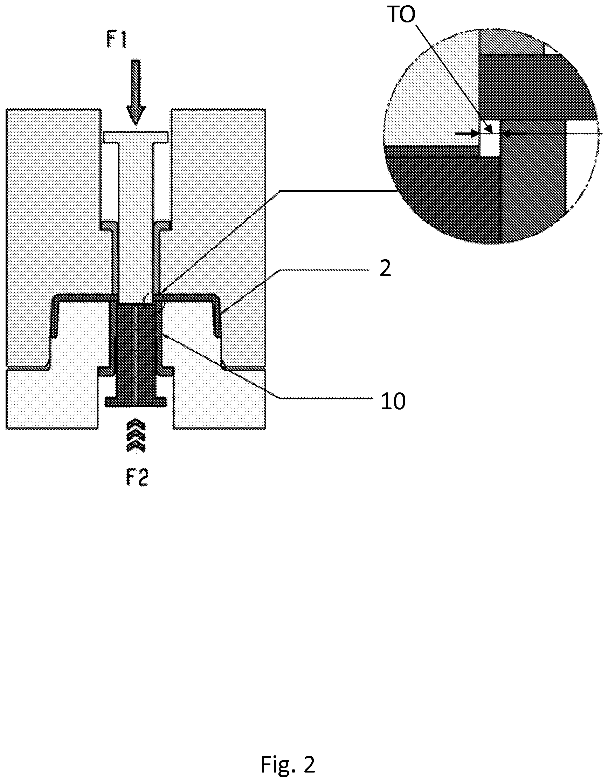

Cette tolérance de coaxialité est réduite au maximum lors de la réalisation/ajustage du moule (1). Le détail de la figure 2 illustre cette notion de tolérance (TO).

La contre broche (7) est asservie par un moyen d'asservissement, tel qu'un vérin hydraulique. Ce moyen d'asservissement (8) applique une contre force F2 inférieure à la force F1 appliquée sur elle-même par la broche (6). Cette contre force est de préférence égale à environ 50% de la force appliquée par la broche (6) sur la contre broche (7).

Grâce à cette contre force, pendant sa descente la broche (6) continue ainsi de comprimer la matière plastique (MP) comprise entre les deux broches (6, 7).

Puis, lorsque la surface d'appui (6a) sort de l'empreinte (5) pour pénétrer dans le premier élément (3), la matière plastique est poinçonnée.

De préférence, au moins l'une des surfaces d'appui (6a, 7a) des broches mobiles (6, 7) est chromée pour limiter l'adhérence de la pastille de matière plastique (MP) résultant du poinçonnage.

Enfin, il est évident que le moule (1) comporte autant de broches (6) que la pièce (2) doit comporter d'orifices, et donc autant de contre broches (7) en vis-à-vis de chaque broche (6).

Le fonctionnement du moule (1) selon l'invention est illustré par les figures 1 à 4.

### Figure 1

Lors de l'étape de fermeture du moule, l'élément mobile (4) descend (se rapproche) vers le premier élément (3). Puis, la matière plastique (MP) est comprimée, puis flue dans l'empreinte (5). Pendant ces opérations, la broche (6) est en position rentrée, sa surface d'appui (6a) est affleurante avec la paroi de l'élément mobile (4) formant l'empreinte (5). La contre broche (7) est en position sortie, sa surface d'appui (7a) est légèrement en saillie, d'environ 0,2 mm, de la paroi de l'élément fixe (3) formant l'empreinte (5). La perturbation du flux de matière plastique engendrée par cette légère position en saillie est négligeable. Enfin, la matière plastique (MP) commence à polymériser.

### Figure 2

Après ou de préférence pendant la polymérisation de la matière plastique (MP), la broche (6) est descendue dans l'empreinte (5) avec un effort F1 qui s'applique à la matière plastique (MP) comprise entre la broche (6) et la contre-broche (7), et donc cet effort F1 s'applique également à la contre broche (7).

La broche (6) descend avec une course correspondant à l'épaisseur de la matière plastique dans le moule plus une surcourse donnée dans l'élément fixe (3). Pour des pièces (2) ayant une épaisseur comprise entre environ 2,5 mm à 5 mm, la course de transfert de la broche (6) dans l'empreinte (5) est supérieure de 2 mm à l'épaisseur locale de la pièce. C'est-à-dire que la broche (6) pénètre de 2 mm dans le premier élément (3), grâce à la contre broche (7) positionnée en vis-à-vis.

Pendant la descente de la broche (6), jusqu'à sa position finale (2 mm à l'intérieur de l'élément fixe (3)), la contre broche (7) exerce un effort axial F2 dans le sens opposé, tout en reculant de 2 mm environ du fait que l'effort F2 est taré à 50% environ de l'effort F1.

Cette contre force permet de comprimer la matière plastique (MP) entre les deux broches (6, 7), afin de perdre moins de matière, et surtout, d'obtenir une pastille (11) de poinçonnage la plus fine possible pour pouvoir l'évacuer du moule (1) avec des moyens simples, tels qu'un soufflage. En position finale, la broche (6) a poinçonné la pièce (2), et une pastille (11) de fine matière plastique comprimée est située entre les broches (6, 7).

En fin de cuisson (polymérisation) de la matière plastique (MP), et avant l'ouverture du moule (1), l'effort F2 est augmenté, grâce à une augmentation de pression dans le vérin hydraulique, pendant un court instant (une seconde par exemple). Selon un exemple, la force F2 devient cette fois environ deux fois supérieure à la force F1. Par alternance de la valeur de la force F2, on engendre un aller-retour de la contre broche (7) et de la broche (6) pour parfaire le cisaillement des fibres de renfort résiduelles pouvant encore lier la pastille (11) issue du poinçonnage avec le reste de la pièce (2).

### Figure 3

La broche (6) reprend sa position de départ. Puis, lors de l'étape d'ouverture du moule (1), l'élément mobile (4) s'éloigne du premier élément (3).

### Figure 4

Une fois le moule (1) ouvert, la pièce (2) ainsi moulée et percée d'au moins un orifice, est éjectée du moule (1) puis évacuée hors du moule (1). La contre broche (7) reprend sa position de départ.

On réalise alors un soufflage pour enlever les bavures résiduelles dans l'empreinte (5). Ce soufflage permet en plus d'enlever la pastille (11) correspondant à chaque orifice poinçonné. Ce soufflage peut être réalisé par le robot préhenseur qui envoie de l'air comprimé au moyen de busettes.

L'invention concerne également un procédé de fabrication d'une pièce (2) en matière plastique (MP) comportant au moins un orifice, au moyen d'un moule (1) selon l'invention. Les figures 1 à 4 illustrent le fonctionnement du moule (1) et du procédé selon l'invention.

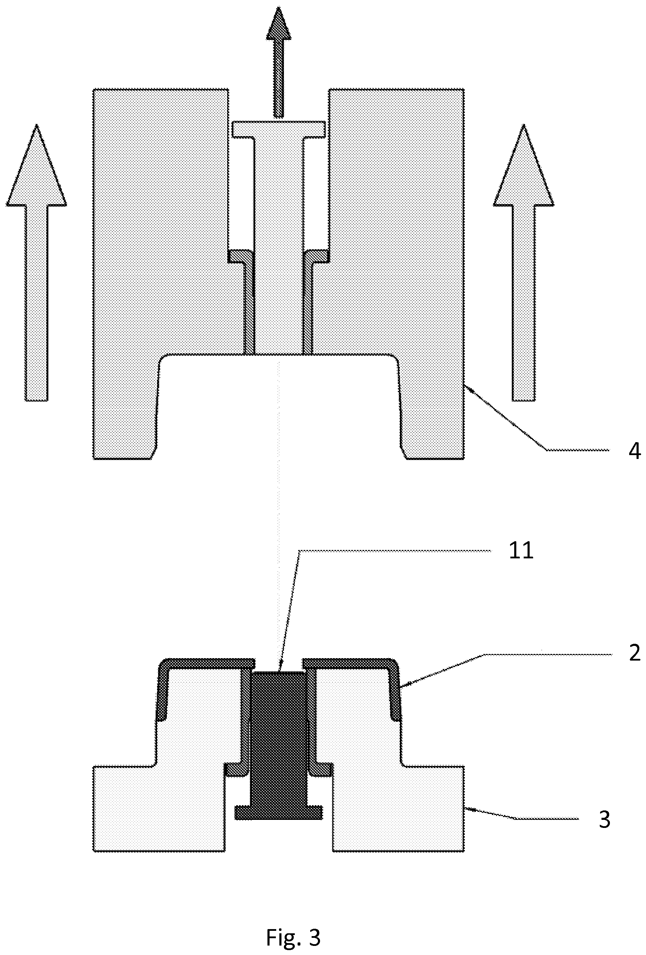

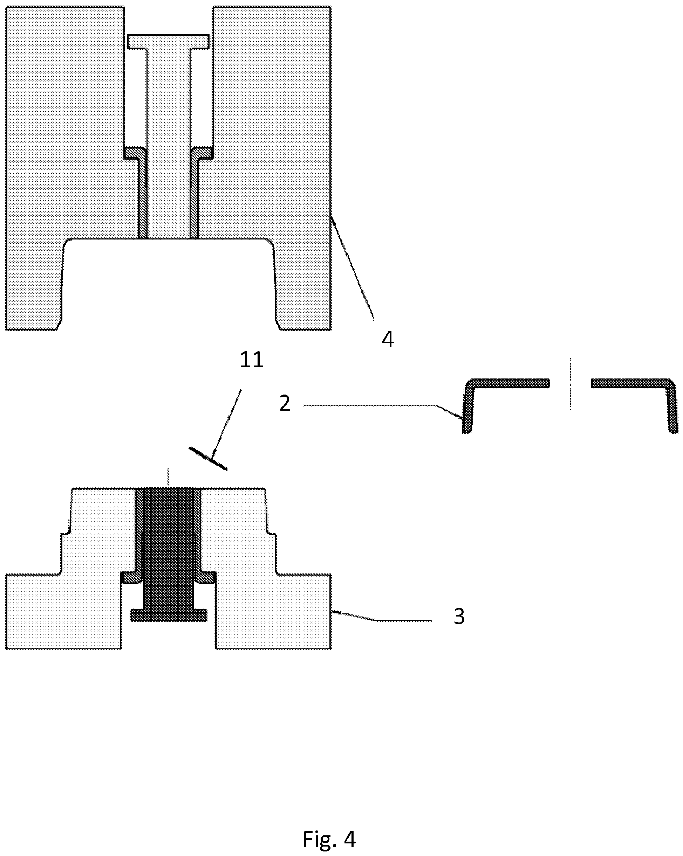

Le procédé selon l'invention comporte au moins les étapes suivantes :
a. on positionne la matière plastique (MP) dans l'empreinte (5) du moule (1) ;
b. on ferme le moule (1) et l'on compacte (figure 1) la matière plastique (MP) dans l'empreinte (figure 1) ;
c. après fluage et pendant la polymérisation de la matière plastique (MP), on poinçonne la matière plastique (MP) polymérisée, en descendant (figure 2) la broche (6) à travers l'empreinte (5) puis dans l'élément fixe (3), la contre broche (7) descendant également tout en exerçant sur la broche (6) un effort axial F2 dans le sens opposé de l'effort F1 exercé par la broche (6), l'effort F2 étant moindre que l'effort F1 ;
d. on ouvre le moule (1) (figure 3) et l'on éjecte la pièce (2) ; et
e. on enlève du moule (1) la pastille (11) issue du poinçonnage, par exemple au moyen d'un soufflage (figure 4).

Pour un moule d'injection, l'étape a) est absente, et l'étape b) consiste à fermer le moule (1) et injecter la matière plastique (MP) dans l'empreinte (5).

L'étape c) et une étape de remise en position initiales de la broche (6) et de la contre broche (7) peuvent être répétées plusieurs fois, de façon à bien poinçonner la pièce (2). Ces répétitions se produisant pendant la phase de polymérisation, l'étape de poinçonnage se fait donc en temps masqué, sans ralentir le procédé de fabrication de la pièce (2).

Selon un mode de réalisation du procédé, en fin de cuisson de la matière plastique (MP), et avant l'ouverture du moule (1), l'effort F2 est augmenté pendant un court instant (une seconde par exemple). Selon un exemple, la force F2 devient cette fois environ deux fois supérieure à la force F1. Ceci entraine un aller-retour de la contre broche (7) et de la broche (6) pour parfaire le cisaillement des fibres de renfort résiduelles pouvant encore lier la pastille (11) issue du poinçonnage avec le reste de la pièce (2).

L'invention n'est pas limitée aux modes de réalisation présentés et d'autres modes de réalisation apparaîtront clairement à l'homme du métier. Il est notamment possible que le moule soit un moule d'injection, ou un moule par extrusion.

## Revendications

1. Moule (1) pour la fabrication de pièce (2) en matière plastique (MP), comportant un premier élément (3) et un second élément (4) formant en position fermée du moule (1) une empreinte (5) correspondant à la pièce (2) à réaliser, dans lequel le second élément (4) comporte au moins une broche (6) mobile par rapport au second élément (4), entre une position rentrée et une position sortie dans l'empreinte (5), **caractérisé en ce que** :
- le premier élément (3) comporte une contre broche (7) mobile par rapport au premier élément (3) et coaxial avec la broche (6) ;
- la broche mobile (6) est apte à traverser l'empreinte et à venir s'engager dans le premier élément (3) au niveau de la contre broche (7) ;
- la contre broche mobile (7) étant reliée à un moyen d'asservissement appliquant une contre force inférieure à la force appliquée sur elle-même par la broche (6), de sorte qu'une matière plastique (MP) comprise entre les deux broches (6, 7) peut être comprimée puis poinçonnée lors du mouvement de la broche (6) vers sa position sortie.

2. Moule (1) selon la revendication 1, dans lequel ledit moyen d'asservissement applique une contre force égale à environ 50% de la force appliquée par la broche (6) sur la contre broche (7).

3. Moule (1) selon l'une des revendications précédentes, dans lequel la contre broche (7) est en saille dans l'empreinte en position sortie.

4. Moule (1) selon l'une des revendications précédentes, dans lequel le rayon de la contre broche (7) est supérieur au rayon de la broche (6).

5. Moule (1) selon l'une des revendications précédentes, dans lequel le rayon de la contre broche (7) est supérieur d'au moins 0,05 mm au rayon de la broche (6).

6. Moule (1) selon l'une des revendications précédentes, dans lequel la surface d'appui (6a) de la broche (6) et/ou la surface d'appui (7a) de la contre broche (7) est chromée.

7. Moule (1) selon l'une des revendications précédentes, dans lequel la broche (6) est guidée dans un premier fourreau d'usure (9).

8. Moule (1) selon l'une des revendications précédentes, dans lequel la contre broche (7) est guidée dans un second fourreau d'usure (10).

9. Moule (1) selon l'une des revendications précédentes, dans lequel le moyen d'asservissement (8) est un vérin hydraulique ou pneumatique.

10. Procédé de fabrication d'une pièce (2) en matière plastique (MP) comportant au moins un orifice, au moyen du moule (1) selon l'une des revendications 1 à 9, le procédé comportant au moins les étapes suivantes :
- on positionne la matière plastique (MP) dans l'empreinte (5) du moule (1) ;
- on ferme le moule (1) et l'on compacte la matière plastique (MP) dans l'empreinte ;
- après fluage et pendant polymérisation de la matière plastique (MP), on poinçonne la matière plastique (MP) polymérisée, en descendant la broche (6) à travers l'empreinte (5) puis dans l'élément fixe (3), la contre broche (7) descendant également tout en exerçant sur la broche (6) un effort axial F2 dans le sens opposé de l'effort F1 exercé par la broche (6), l'effort F2 étant moindre que l'effort F1 ;
- on ouvre le moule (1) et l'on éjecte la pièce (2) ; et
- on enlève du moule (1) la pastille (11) issue du poinçonnage, par exemple au moyen d'un soufflage.

11. Procédé selon la revendication 10, dans lequel lors de l'étape de poinçonnage par la broche (6), l'effort F2 est environ deux fois moindre que l'effort F1.

12. Procédé selon l'une des revendications 10 et 11, dans lequel, avant l'étape d'ouverture du moule (1), on répète l'étape de poinçonnage et de remise en positions initiales de la broche (6) et de la contre broche (7), de façon à bien poinçonner la pièce (2).

13. Procédé selon l'une des revendications 10 à 12, dans lequel, avant l'étape d'ouverture du moule (1), on augmente l'effort F2 pendant un court instant, supérieur à l'effort F1, de façon à parfaire le poinçonnage.

14. Procédé selon la revendication 13, dans lequel lors de l'étape d'augmentation de l'effort F2, l'effort F2 est environ deux fois supérieur à l'effort F1.

## Patentansprüche

1. Formwerkzeug (1) für die Herstellung eines Teils (2) aus Kunststoff (MP), mit einem ersten Element (3) und einem zweiten Element (4), die in geschlossener Position des Formwerkzeugs (1) eine Formhöhlung (5) bilden, die dem zu realisierenden Teils (2) entspricht, wobei das zweite Element (4) mindestens eine Spindel (6) aufweist, die gegenüber dem zweiten Element (4) beweglich ist zwischen einer eingefahrenen Position und einer ausgefahrenen Position in der Formhöhlung (5), **dadurch gekennzeichnet, dass**:
- das erste Element (3) eine Gegenspindel (7) aufweist, die gegenüber dem ersten Element (3) beweglich ist und mit der Spindel (6) koaxial ist;
- die bewegliche Spindel (6) in der Lage ist, die Formhöhlung zu durchqueren und in dem ersten Element (3) im Bereich der Gegenspindel (7) in Eingriff zu kommen;
- wobei die Gegenspindel (7) verbunden ist mit einem Regelungsmittel, das eine Gegenkraft aufbringt, die kleiner ist als die Kraft, die von der Spindel (6) auf sie selbst aufgebracht wird, so dass ein Kunststoff (MP), der zwischen den zwei Spindeln (6, 7) enthalten ist, zusammengedrückt und dann bei der Bewegung der Spindel (6) in ihre ausgefahrene Position durchstanzt werden kann.

2. Formwerkzeug (1) nach Anspruch 1, wobei das Regelungsmittel eine Gegenkraft aufbringt, die etwa gleich 50 % der von der Spindel (6) auf die Gegenspindel (7) aufgebrachten Kraft ist.

3. Formwerkzeug (1) nach einem der vorhergehenden Ansprüche, wobei die Gegenspindel (7) in ausgefahrener Position in die Formhöhlung hineinragt.

4. Formwerkzeug (1) nach einem der vorhergehenden Ansprüche, wobei der Radius der Gegenspindel (7) größer ist als der Radius der Spindel (6).

5. Formwerkzeug (1) nach einem der vorhergehenden Ansprüche, wobei der Radius der Gegenspindel (7) um mindestens 0,05 mm größer ist als der Radius der Spindel (6).

6. Formwerkzeug (1) nach einem der vorhergehenden Ansprüche, wobei die Abstützfläche (6a) der Spindel (6) und/oder die Abstützfläche (7a) der Gegenspindel (7) chromiert ist.

7. Formwerkzeug (1) nach einem der vorhergehenden Ansprüche, wobei die Spindel (6) in einer ersten Verschleißhülse (9) geführt ist.

8. Formwerkzeug (1) nach einem der vorhergehenden Ansprüche, wobei die Gegenspindel (7) in einer zweiten Verschleißhülse (10) geführt ist.

9. Formwerkzeug (1) nach einem der vorhergehenden Ansprüche, wobei das Regelungsmittel (8) ein hydraulischer oder pneumatischer Zylinder ist.

10. Verfahren zur Herstellung eines Teils (2) aus Kunststoff (MP) mit mindestens einer Öffnung mittels des Formwerkzeugs
(1) nach einem der Ansprüche 1 bis 9, wobei das Verfahren mindestens die folgenden Schritte aufweist:
- Positionieren des Kunststoffs (MP) in der Formhöhlung (5) des Formwerkzeugs (1);
- Schließen des Formwerkzeugs (1) und Verdichten des Kunststoffs (MP) in der Formhöhlung;
- nach dem Fließen und während des Polymerisierens des Kunststoffs (MP), Durchstanzen des polymerisierten Kunststoffs (MP) bei Herunterfahren der Spindel (6) durch die Formhöhlung (5) hindurch, wobei dann in dem unbeweglichen Element (3) die Gegenspindel (7) ebenfalls herunterfährt und gleichzeitig auf die Spindel (6) eine axiale Kraft F2 in der zu der Kraft F1, die von der Spindel (6) aufgebracht wird, entgegengesetzten Richtung aufbringt, wobei die Kraft F2 geringer ist als die Kraft F1;
- Öffnen des Formwerkzeugs (1) und Auswerfen des Teils (2) ; und
- Herausnehmen, aus dem Formwerkzeug (1), des aus dem Durchstanzen hervorgegangenen Plättchens (11), zum Beispiel mittels eines Ausblasens.

11. Verfahren nach Anspruch 10, bei dem bei dem Schritt des Durchstanzens durch die Spindel (6) die Kraft F2 etwa zweimal geringer ist als die Kraft F1.

12. Verfahren nach einem der Ansprüche 10 und 11, bei dem, vor dem Schritt des Öffnens des Formwerkzeugs (1), der Schritt des Durchstanzens und des Zurückversetzens der Spindel (6) und der Gegenspindel (7) in die Ausgangspositionen wiederholt wird, so dass das Teil (2) gut durchstanzt wird.

13. Verfahren nach einem der Ansprüche 10 bis 12, bei dem, vor dem Schritt des Öffnens des Formwerkzeugs (1), die Kraft F2 während eines kurzen Zeitraums, größer als die Kraft F1, erhöht wird, so dass das Durchstanzen vervollkommnet wird.

14. Verfahren nach Anspruch 13, bei dem bei dem Schritt des Erhöhens der Kraft F2, die Kraft F2 etwa zweimal größer ist als die Kraft F1.

## Claims

1. Mould (1) for making articles (2) made of plastic material (MP), comprising a first element (3) and a second element (4) forming in the closed position of the mould (1) a cavity (5) corresponding to the article (2) to be made, wherein the second element (4) comprises at least one pin (6) movable relative to the second element (4), between a retracted position and an extended position in the cavity (5), **characterised in that**:
- the first element (3) comprises a counter-pin (7) movable relative to the first element (3) and coaxial with the pin (6),
- the movable pin (6) is adapted to cross the cavity and engage in the first element (3) at the counter-pin (7);
- the counter-pin (7) is connected to a slaving means applying a reaction force less than the force applied to it by the pin (6), such that a plastic material (MP) between the two pins (6, 7) can be compressed then punched as the pin (6) moves towards its extended position.

2. Mould (1) according to claim 1, wherein said slaving means applies a reaction force equal to about 50 % of the force applied by the pin (6) on the counter-pin (7).

3. Mould (1) according to one of the preceding claims, wherein the counter-pin (7) projects into the cavity in the extended position.

4. Mould (1) according to one of the preceding claims, wherein the radius of the counter-pin (7) is greater than the radius of the pin (6).

5. Mould (1) according to one of the preceding claims, wherein the radius of the counter-pin (7) is greater by at least 0.05 mm than the radius of the pin (6).

6. Mould (1) according to one of the preceding claims, wherein the bearing surface (6a) of the pin (6) and/or the bearing surface (7a) of the counter-pin (7) is chromium-plated.

7. Mould (1) according to one of the preceding claims, wherein the pin (6) is guided in a first wearing sleeve (9).

8. Mould (1) according to one of the preceding claims, wherein the counter-pin (7) is guided in a second wearing sleeve (10).

9. Mould (1) according to one of the preceding claims, wherein the slaving means (8) is a hydraulic or pneumatic cylinder.

10. Method for manufacturing an article (2) made of plastic material (MP) comprising at least one opening, using the mould (1) according to one of claims 1 to 9, the method comprising at least the following steps:
- positioning the plastic material (MP) in the cavity (5) of the mould (1);
- closing the mould (1) and compressing the plastic material (MP) in the cavity;
- after flow and during polymerisation of the plastic material (MP), punching the polymerised plastic material (MP), by lowering the pin (6) through the cavity (5) then in the fixed element (3), the counter-pin (7) also lowering while exerting on the pin (6) an axial force F2 in the direction opposite to the force F1 exerted by the pin (6), the force F2 being less than the force F1;
- opening the mould (1) and ejecting the article (2); and
- removing from the mould (1) the pellet (11) resulting from punching, for example by blowing.

11. Method according to claim 10, wherein during the step of punching by the pin (6), the force F2 is about half of the force F1.

12. Method according to claim 10 or 11, wherein, before the step of opening the mould (1), the step of punching and returning the pin (6) and counter-pin (7) to their initial positions is repeated in order to punch the article (2) correctly.

13. Method according to one of claims 10 to 12, wherein, before the step of opening the mould (1), the force F2 is increased for a short duration, greater than force F1, in order to improve the punching.

14. Method according to claim 13, wherein during the step of increasing the force F2, the force F2 is about double the force F1.
